# EUROPÄISCHE PATENTSCHRIFT

(11) **EP 0 866 652 B1**
(45) Veröffentlichungstag und Bekanntmachung des Hinweises auf die Patenterteilung: **05.01.2000**
(21) Anmeldenummer: 96945870.2
(22) Anmeldetag: 07.11.1996
(51) Int. Cl.: A01C 7/20, A01C 15/00, A01C 7/08

(54) **SÄMASCHINE**
SEEDER
SEMOIR

(30) Priorität: 10.11.1995 DE 29517786 U
(43) Veröffentlichungstag der Anmeldung: 30.09.1998
(73) Patentinhaber: Lemken GmbH & Co. KG, 46519 Alpen (DE)
(72) Erfinder: SORG, Friedrich, D-35418 Buseck (DE)
(74) Vertreter: Schlagwein, Udo, Dipl.-Ing.
(86) Internationale Anmeldenummer: DE9602130
(87) Internationale Veröffentlichungsnummer: WO9716953

(56) Entgegenhaltungen:
- EP-A- 0 640 274
- EP-A- 0 687 406
- FR-A- 2 499 817
- FR-A- 2 505 130
- FR-A- 2 525 067

## Beschreibung

Die Erfindung betrifft eine Sämaschine mit einem einen Vorratsbehälter tragenden Maschinenrahmen, an dem Säschare und ein Antriebsrad um eine quer zur Sämaschine verlaufende Achse schwenkbar angelenkt sind. Sämaschinen der vorstehenden Art sind allgemein bekannt und werden in der Landwirtschaft derzeit eingesetzt.

Eine Sämaschine der vorstehenden Art ist Gegenstand der EP-A-0 640 274. Diese Sämaschine lässt sich mittels eines Dreipunktgestänges mit einem Schlepper verbinden und kann durch das Dreipunktgestänge als Ganzes angehoben werden.

Beim Säen mit solchen Sämaschinen ist es erforderlich, daß nach dem Säen jeweils einer Bahn am Feldende die Säschare, das Antriebsrad und die Striegel ausgehoben werden und ausreichend Abstand vom Boden erhalten, bevor der die Sämaschine ziehende Schlepper dreht. Haben diese Bauteile während des Drehens noch Kontakt mit dem Boden, dann kommt es beim Drehen zu einem Verbiegen von diese Bauteile tragenden Maschinenteilen. In der Praxis reicht der mit der Dreipunktaufhängung des Schleppers mögliche Hub nicht, um die Sämaschine so weit anzuheben, daß die Säschare, das Antriebsrad und die Striegel ausreichenden Abstand vom Boden erhalten, zumal während des Drehens die gesamte Sämaschine oftmals ins Schwingen gerät und es dadurch bei ungenügend weitem Ausheben zu einem kurzfristigen Bodenkontakt kommen kann.

Um einen ausreichenden Bodenabstand des Antriebsrades, der Säschare und Striegel sicherzustellen, hat man bislang diese Bauteile jeweils schwenkbar am Maschinenrahmen befestigt und zu ihrem Verschwenken jeweils einen Hubzylinder vorgesehen, wodurch die Sämaschine relativ aufwendig gestaltet war. Als Beispiel für den Stand der Technik wird auf die FR-A-2525067 verwiesen. Diese Schrift zeigt einen Hubzylinder, durch den ein kompletter Maschinenrahmen mit einem Saatgutbehälter und Säscharen verschwenkt werden kann.

Der Erfindung liegt das Problem zugrunde, eine Sämaschine der eingangs genannten Art so zu gestalten, daß ihr baulicher Aufwand zur Ermöglichung des Aushebens des Antriebsrades, der Säschare und Striegel möglichst gering ist.

Dieses Problem wird erfindungsgemäß dadurch gelöst, daß der Träger zusätzlich Striegel trägt und um die Achse schwenkbar angeordnet ist und daß an dem Träger mit vertikalem Abstand zur Achse ein mit seinem anderen Ende am Maschinenrahmen befestigter Hubzylinder angelenkt ist, dessen Hub zum Verschwenken des Trägers mit den Säscharen, dem Antriebsrad und den Striegeln aus einer Arbeitsin eine Ruheposition bemessen ist.

Bei einer solchen Sämaschine sind alle zum Wenden und für den Transport der Sämaschine auszuhebenden Bauteile an einem einzigen, schwenkbaren Träger befestigt. Deshalb genügt das Verschwenken dieses Trägers, um alle auszuhebenden Bauteile gleichzeitig auszuheben. Dadurch ist für das Ausheben nur noch ein einziger Motor erforderlich. Dank der Erfindung kann auch nicht das Ausheben einzelner Bauteile vergessen oder bei einem Defekt das nicht erfolgte Ausheben übersehen werden. Durch den gemeinsamen Träger ist sichergestellt, daß alle auszuhebenden Bauteile ausgehoben sind, wenn man sich durch einen flüchtigen Blick überzeugt hat, daß beispielsweise das Antriebsrad ausgehoben wurde. Da an dem Träger mit vertikalem Abstand zur Achse ein Hubzylinder angelenkt ist, welcher mit seinem anderen Ende am Maschinenrahmen befestigt ist, bedingt das Verschwenken des Trägers besonders geringen baulichen Aufwand.

Die Erfindung läßt verschiedene Ausführungsformen zu. Eine davon ist in der Zeichnung dargestellt und wird nachfolgend beschrieben. Diese zeigt in
- Fig.1: eine teilweise geschnitten dargestellte Seitenansicht einer erfindungsgemäßen Sämaschine in Arbeitsstellung hinter einer Bodenbearbeitungsmaschine,
- Fig.2: die Sämaschine nach Figur 1 in ausgehobener Stellung ihres Antriebsrades, ihrer Säschare und ihrer Striegel.

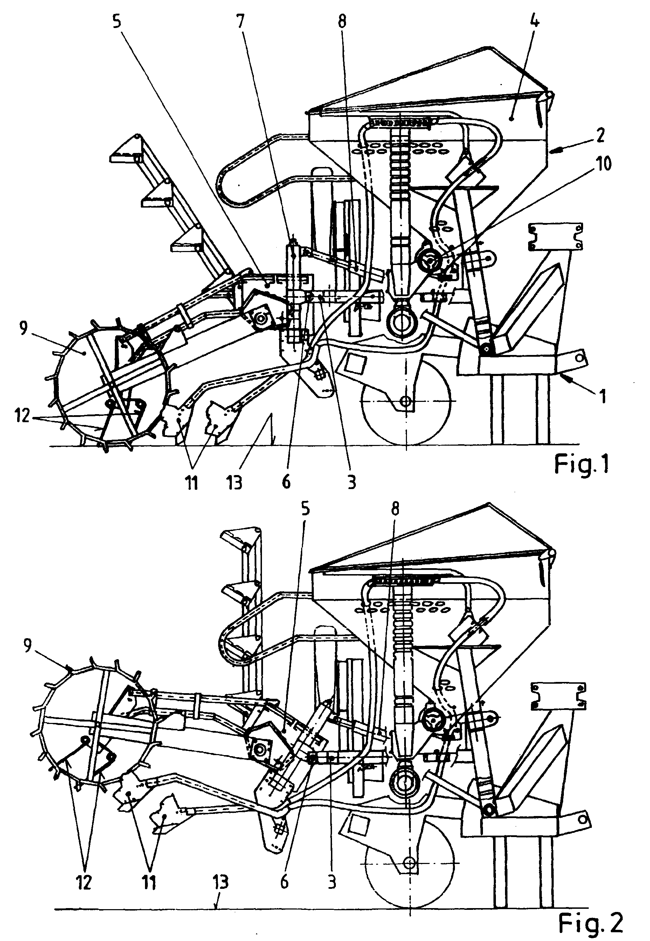

Die Figur 1 zeigt eine Bodenbearbeitungsmaschine 1, bei der es sich beispielsweise um eine Kreiselegge handeln kann. An dieser Bodenbearbeitungsmaschine 1 ist eine erfindungsgemäß gestaltete Sämaschine 2 angekuppelt. Die Sämaschine 2 hat einen Maschinenrahmen 3, welcher insbesondere einen Saatgutbehälter 4 trägt. Nahe des rückwärtigen Endes des Maschinenrahmens 3 ist an diesem ein quer verlaufender Träger 5 um eine ebenfalls quer verlaufende Achse 6 schwenkbar befestigt. Der Träger 5 hat einen nach oben ragenden Arm 7, an welchem ein Hubzylinder 8 mit einem Ende angelenkt ist. Das andere Ende des Hubzylinders 8 ist am Maschinenrahmen 3 angelenkt. Durch diesen Hubzylinder 8 wird es möglich, den Träger 5 um die Achse 6 zu verschwenken.

Wichtig für die Erfindung ist es, daß am Träger 5 sowohl ein Antriebsrad 9 zum Antrieb eines Dosierers 101 Säschare 11 und Striegel 12 derart befestigt sind, daß diese Bauteile bei einem Verschwenken des Trägers 5 im Uhrzeigersinn vom in den Figuren mit 13 positionierten Boden freikommen.

In Figur 2 ist die ausgehobene Stellung des Antriebsrades 9, der Säschare 11 und der Striegel 12 dargestellt. Man erkennt, daß sich der Träger 5 durch einen Einwärtshub des Hubzylinders 8 im Uhrzeigersinn um die Achse 6 verschwenkt hat, wodurch das Antriebsrad 9, die Säschare 11 und Striegel 12 ausreichenden Abstand vom Boden 13 erhalten, so daß es während des Wendens auch bei Schwingbewegungen nicht zu einem Bodenkontakt kommen kann.

### Bezugszeichenliste

- 1: Bodenbearbeitungsmaschine
- 2: Sämaschine
- 3: Maschinenrahmen
- 4: Saatgutbehälter
- 5: Träger
- 6: Achse
- 7: Arm
- 8: Hubzylinder
- 9: Antriebsrad
- 10: Dosierer
- 11: Säschar
- 12: Striegel
- 13: Boden

## Patentansprüche

1. Sämaschine mit einem einen Saatgutbehälter (4) tragenden Maschinenrahmen (3), an dessen Rückseite an einem Träger (5) Säschare (11) und ein Antriebsrad (9) um eine quer zur Sämaschine (2) verlaufende Achse (6) schwenkbar angelenkt sind, **dadurch gekennzeichnet**, daß der Träger (5) zusätzlich Striegel (12) trägt und um die Achse (6) schwenkbar angeordnet ist und daß an dem Träger (5) mit vertikalem Abstand zur Achse (6) ein mit seinem anderen Ende am Maschinenrahmen (3) befestigter Hubzylinder (8) angelenkt ist, dessen Hub zum Verschwenken des Trägers (5) mit den Säscharen (11), dem Antriebsrad (9) und den Striegeln (12) aus einer Arbeits- in eine Ruheposition bemessen ist.

## Claims

1. Seeder with a machine frame (3) which carries a seed container (4) and on the back of which, drill ploughs (11) and a driving wheel (9) carried on a support (5) are pivotable about an axis (6) extending transversely with respect to the seeder (2), characterized in that the support (5) also carries combs (12) and is pivotable about the axis (6) and in that a lifting cylinder (8) is coupled to the support (5) at a vertical distance from the axis (6) and is attached by its other end to the machine frame (3), the stroke of said cylinder (8) being sufficient to tilt the support (5) with the drill ploughs (11), driving wheel (9) and combs (12) from a working position to a rest position.

## Revendications

1. Semoir comprenant un châssis de machine (3) qui porte une boîte à semences (4), et au côté arrière duquel des coutres de semoir (11) et une roue d'entraînement (9) sont articulés sur une poutre (5) pour pouvoir pivoter autour d'un axe (6) qui s'étend transversalement au semoir (2), caractérisé en ce que la poutre (5) porte en supplément des brosses (12) et est disposée pour pouvoir pivoter autour de l'axe (6) et en ce qu'à la poutre (5), à une certaine distance verticale de l'axe (6), est articulé un vérin (8) qui est fixé au châssis (3) du semoir par son autre extrémité et dont la course est étudiée pour faire pivoter la poutre (5), avec les coutres de semoir (11), la roue d'entraînement (9) et les brosses (12) pour les faire passer d'une position de travail à une position de repos.
